# EUROPEAN PATENT APPLICATION

(11) **EP 4 834 486 A1**
(43) Date of publication of application: **04.11.2026**
(21) Application number: 26163711.0
(22) Date of filing: 10.03.2026
(51) Int. Cl.: B05B 13/00

(54) **CLEANING SYSTEM FOR A COATING ROBOT**

(30) Priority: 30.04.2025 JP 2025075383
(71) Applicant: ABB Robotics Schweiz AG, 8050 Zürich (CH)
(72) Inventor: IIDA, Kisumi, Tokyo, 1416022 (JP); YAMAUCHI, Kuniharu, Tokyo, 1416022 (JP)
(74) Representative: Zimmermann & Partner Patentanwälte mbB

(57) **Abstract**

[Problem] To provide a cleaning system for a coating robot that can suppress deterioration in cleaning performance and increase in cleaning time for the coating material circulation passage even in the case of specifications involving a long return flow passage from the coating head.

[Solution] A cleaning system 1 for a coating robot 10 comprises: a coating head unit 30 comprising an inkjet type coating head 31; a robot arm R1; a cap 93 that seals at least a portion of a nozzle forming surface 32; a cap movement mechanism 94; a coating material supply passage 52; a return flow passage 53 which recovers the coating material or cleaning fluid toward a coating material tank 57 that is a separate element from at least the robot arm R1; a pressurization means which pressurizes the cleaning fluid; a cleaning suction means which sucks the cleaning fluid; and a control means which controls actuation of the pressurization means and the cleaning suction means; wherein the control means, during cleaning, actuates the cap movement mechanism 94 to seal the nozzle forming surface 32 with the cap 93, and then actuates the cleaning suction means along with actuation of the pressurization means.

## Description

### [Technical Field]

The present invention relates to a cleaning system for a coating robot.

### [Background Art]

Coating robots that coat vehicles include, for example, ones such as shown in Patent Document 1. Patent Document 1 discloses an inkjet type coating device comprising a coating material circulation passage comprising an ink tank (11), a forward passage (12) which conveys ink from the ink tank (11) to an inkjet head (10), and a return passage (13) which returns ink from the inkjet head (10) to the ink tank (11).

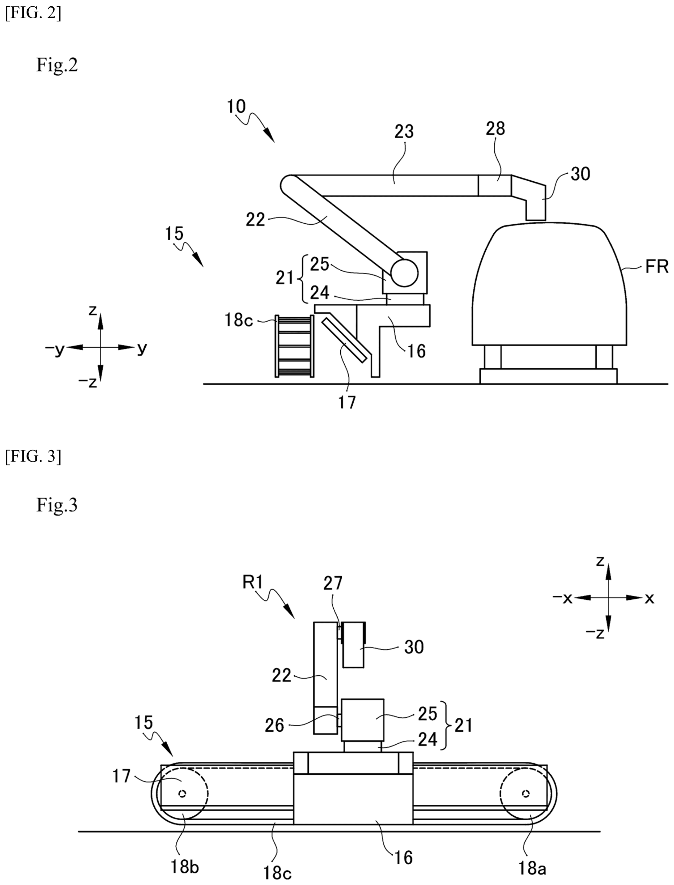

With this configuration, during cleaning, ink is flowed from the forward passage (12) to the return passage (13) while bypassing the inkjet head (10), and cleaning liquid is flowed to the inkjet head (10) using a first cleaning liquid flow passage (15) and a second cleaning liquid flow passage (16), which are cleaning liquid lines constituting a separate system (FIG. 2A).

### [Prior Art Documents]

### [Patent Documents]

[Patent Document 1] Japanese Unexamined Patent Application Publication No. 2018-030047

### [Summary of the Invention]

### [Problem to be Solved by the Invention]

Here, with the configuration disclosed in Patent Document 1, in order to clean the return passage (13) constituting the ink return flow passage, the cleaning liquid needs to be made to flow through the return passage (13) during cleaning. However, as the distance between the ink tank (11) and the inkjet head (10) becomes longer, the return passage (13) also becomes longer, and so the return of cleaning liquid from the head becomes poorer and cleaning efficiency for the coating material circulation passage as a whole decreases.

The present invention was made based on the above circumstances, and it is an object of the present invention to provide a cleaning system for a coating robot that can suppress deterioration in cleaning performance and increases in cleaning time for the coating material circulation passage even in the case of specifications involving a long return flow passage from the coating head.

### [Means for Solving the Problem]

To solve the above problem, according to a first aspect of the present invention, there is provided a cleaning system for a coating robot that performs coating on a coating portion of a vehicle, the cleaning system for a coating robot being characterized in that it comprises: a coating head unit comprising an inkjet type coating head in which a plurality of nozzles that eject coating material are arrayed; a robot arm which has the coating head unit installed on its distal end and which moves the coating head unit to a desired position; a cap that seals at least a portion of a nozzle forming surface on which the nozzles are exposed; a cap movement mechanism that moves the nozzle forming surface relative to the cap to achieve a sealed state of the nozzle forming surface; a coating material supply passage which supplies the coating material or cleaning fluid toward the coating head; a return flow passage which is connected to the coating material discharge side of the coating head and which recovers the coating material or cleaning fluid toward a coating material tank that is a separate element from at least the robot arm; a pressurization means which pressurizes the cleaning fluid that is to be supplied toward the coating head in one of the coating material supply passage and the return flow passage; a cleaning suction means which sucks the cleaning fluid discharged from the coating head in the other one of the coating material supply passage and the return flow passage; and a control means which controls actuation of the pressurization means and the cleaning suction means; wherein the control means, during cleaning using the cleaning fluid, actuates the cap movement mechanism to seal the nozzle forming surface with the cap, and then actuates the cleaning suction means along with actuation of the pressurization means so as to increase discharge speed of the cleaning fluid as compared to the case of actuating only the pressurization means.

### [Advantageous Effect of the Invention]

According to the present invention, it is possible to provide a cleaning system for a coating robot that can suppress deterioration in cleaning performance and increase in cleaning time for the coating material circulation passage even in the case of specifications involving a long return flow passage from the coating head.

### [Brief Description of the Drawings]

[FIG. 1] is a top view illustrating the configuration of a coating robot according to an embodiment of the present invention.
[FIG. 2] is a drawing illustrating the coating robot shown in FIG. 1 as viewed from the upstream side of the coating line.
[FIG. 3] is a drawing illustrating the coating robot shown in FIG. 1 as viewed from the vehicle body side.
[FIG. 4] is a drawing illustrating a schematic configuration of a cleaning system for the coating robot shown in FIG. 1.
[FIG. 5] is a drawing illustrating, in front view, a nozzle forming surface that ejects coating material in the coating head unit provided in the coating robot shown in FIG. 1.
[FIG. 6] is a plan view illustrating the configuration of a nozzle forming surface in another coating head unit different from the coating head unit shown in FIG. 3.
[FIG. 7] is a drawing illustrating a schematic configuration for supplying coating material to the nozzles of the coating head provided in the coating robot shown in FIG. 1.
[FIG. 8] is a drawing illustrating a schematic control configuration centered on the control unit of the cleaning system for the coating robot shown in FIG. 1.
[FIG. 9] is a drawing illustrating a cleaning chart for cleaning the internal flow passage inside the coating head of the coating robot shown in FIG. 1.
[FIG. 10] is a drawing illustrating a schematic configuration of a cleaning system according to a modified example.

### [Modes for Carrying Out the Invention]

A cleaning system 1 for a coating robot 10 according to an embodiment of the present invention will be described below based on the drawings. It should be noted that the cleaning system 1 performs cleaning of a coating system that performs coating by ejecting coating material onto an object to be coated. Therefore, the cleaning system 1 also qualifies as a coating system that performs coating on an object to be coated.

Furthermore, in the following description, as may be necessary, it will be assumed that the X direction is the long direction of the nozzle forming surface 32 (coating head 31), the X1 side is the right side in FIG. 3, and the X2 side is the left side in FIG. 3. Furthermore, it will be assumed that the Y direction is the short direction (width direction) of the nozzle forming surface 32 (coating head 31), the Y1 side is the top side of the page in FIG. 3, and the Y2 side is the bottom side of the page in FIG. 3.

### (1. Overview of the coating robot 10)

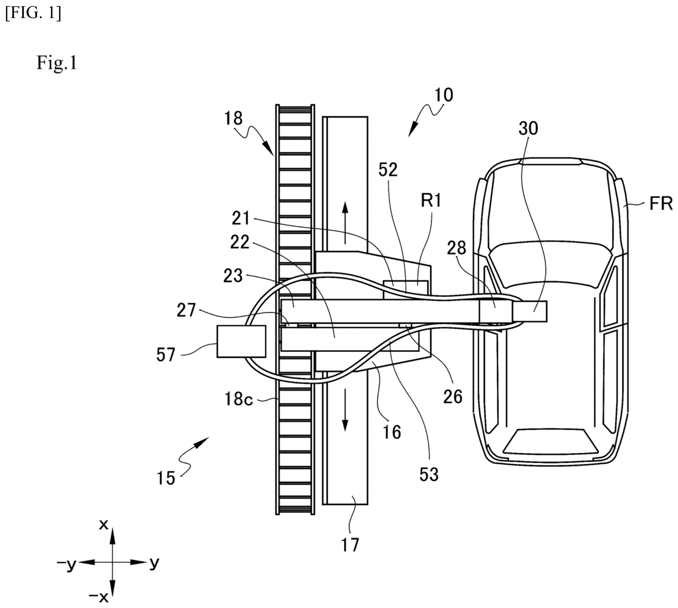

The cleaning system 1 of the present embodiment performs "coating" on an object to be coated, such as a vehicle FR (see FIG. 1 and FIG. 2) or vehicle component (in the following, a vehicle component constituting a portion of a vehicle FR will be described as vehicle FR) located on a coating line in an automobile manufacturing plant, for the purpose of forming a coating film on the surface of the object to be coated so as to provide protection or improved appearance to that surface. Therefore, such a system needs to perform coating, within a fixed period of time and at a desired coating quality, on vehicles FR that move along the coating line at predetermined intervals of time.

Furthermore, the cleaning system 1 of the present embodiment can not only form a coating film as described above but can also form various types of designs and images on the object to be coated, such as a vehicle FR. It should be noted that the object to be coated is not limited to the vehicle FR and vehicle components, and may be anything that needs to be coated, such as various types of non-automobile components (for example, exterior components for airplanes and rail transport).

### (1-1. Overall configuration of the cleaning system 1 of the coating robot 10)

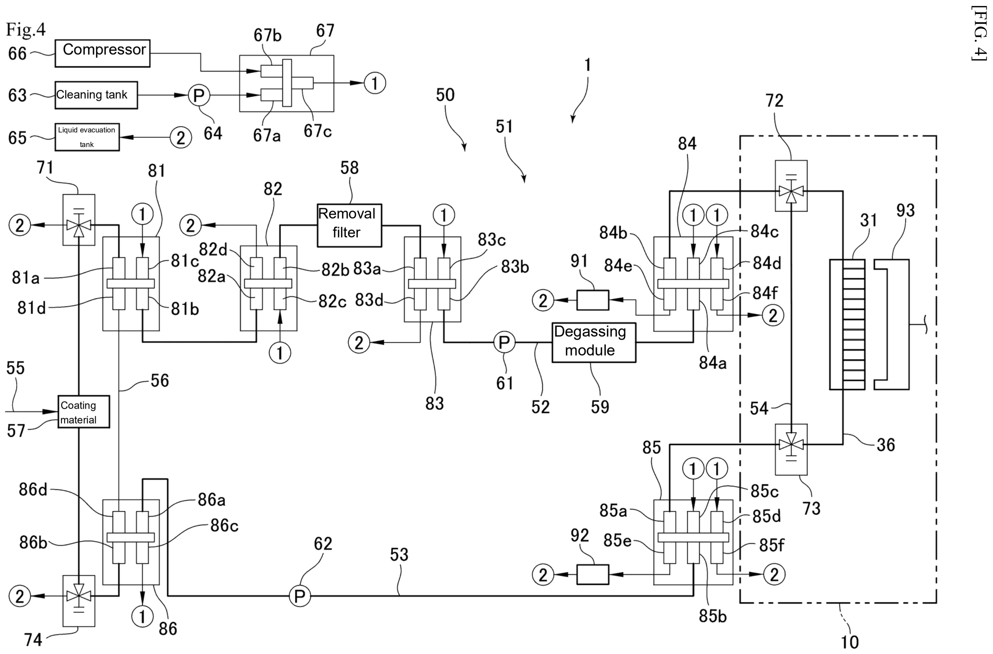

FIG. 1 is a top view illustrating the configuration of a coating robot 10 according to an embodiment of the present invention. FIG. 2 is a drawing illustrating the coating robot 10 shown in FIG. 1 as viewed from the upstream side of the coating line. FIG. 3 is a drawing illustrating the coating robot shown in FIG. 1 as viewed from the vehicle body side. FIG. 4 is a drawing illustrating a schematic configuration of the cleaning system 1 of the coating robot 10 shown in FIG. 1. As shown in FIG. 1 to FIG. 4, the cleaning system 1 comprises a coating robot 10 and a coating material supply and cleaning mechanism 50.

### (1-2. Coating robot 10)

As shown in FIG. 1, the coating robot 10 comprises, as an example, a robot arm R1, a movement device 15, and a coating head unit 30. The robot arm R1 is composed of a multi-axis arm having a base 21 and multiple (two in FIG. 1) arm members 22, 23. The base 21 comprises a fixed portion 24 that is fixed to a moving platform 16, described later, and a rotating portion 25 that is rotatable relative to the fixed portion 24. The fixed portion 24 comprises an unillustrated motor inside. The rotating portion 25 rotates, by driving of the unillustrated motor, about a direction perpendicular to the floor surface of the coating line (the z direction or -z direction in FIG. 2 or FIG. 3) as a center of rotation.

Hereinafter, among the multiple arm members 22, 23, the arm member 22 coupled to the rotating portion 25 will be referred to as the first turning arm 22, and the arm member 23 coupled to the first turning arm 22 will be referred to as the second turning arm 23.

The first turning arm 22 is coupled to a movable shaft portion 26 provided in the rotating portion 25 at one end in the direction of extension of the first turning arm 22. The movable shaft portion 26 provided in the rotating portion 25 is provided with a motor (not illustrated) for turning the coupled first turning arm 22 in a plane orthogonal to the floor surface of the coating line (for example, the yz plane when the robot arm R1 is in the state of FIG. 2).

In the direction of extension of the first turning arm 22, the second turning arm 23 is coupled via a movable shaft portion 27 to the other end, which is opposite to the one end coupled to the movable shaft portion 26 of the rotating portion 25. The movable shaft portion 27 is provided with a motor (not illustrated) and turns the coupled second turning arm 23 in a plane orthogonal to the floor surface of the coating line (for example, the yz plane when the robot arm R1 is in the state of FIG. 2). Moreover, although not illustrated, the central axis of the movable shaft portion 26 of the rotating portion 25 and the central axis of the movable shaft portion 27 provided in the first turning arm 22 are parallel.

The other end of the second turning arm 23 in the direction of extension is provided with a wrist portion 28. The wrist portion 28 holds the coating head unit 30. Although the details of the configuration will be omitted, the wrist portion 28 has multiple (here, three) motors (not illustrated), each with a different axial direction of the drive shaft, and driving any one of these motors causes the held coating head unit 30 to turn about one of the multiple shaft portions that the wrist portion 28 has as a center of turning. It should be noted that the number of shaft portions is preferably two or more.

The movement device 15 is installed, for example, on the floor surface of the coating room, and reciprocates the robot arm R1 in one direction (the x direction or -x direction in FIG. 1 or FIG. 3) along the floor surface of the coating room. It should be noted that the direction of movement of the robot arm R1 by the movement device 15 becomes the coating direction (primary scanning direction) of the coating head 31, described later. The movement device 15 comprises a moving platform 16 to which the base 21 of the robot arm R1 is fixed, a rail 17 that guides the movement of the moving platform 16, and a drive mechanism 18 that reciprocates the moving platform 16 along the rail 17.

The rail 17 is fixed to the floor surface of the coating room by an unillustrated frame, for example, in a state where the direction of extension of the rail 17 is along the x direction or -x direction in FIG. 1.

The drive mechanism 18 is fixed, for example, to the floor surface of the coating room by an unillustrated frame. The drive mechanism 18 is composed of, as an example, an unillustrated drive motor, a drive-side sprocket 18a, a driven-side sprocket 18b, and a drive belt 18c wound around these sprockets 18a and 18b. However, the drive mechanism 18 is not limited to such a mechanism, and may have any configuration as long as the base 21 can be moved along the rail 17.

### (1-3. Coating head unit 30)

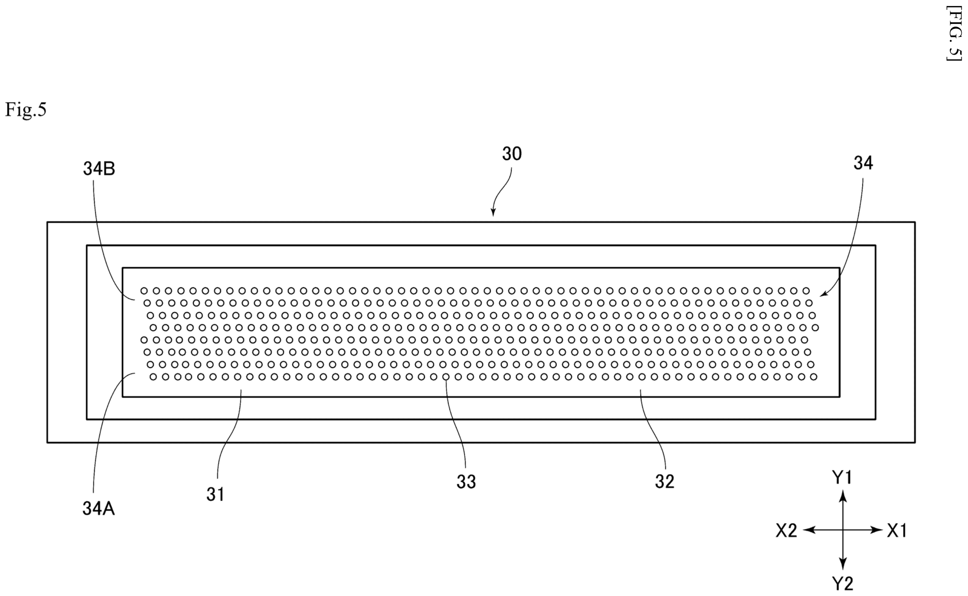

Next, the coating head unit 30 provided in the coating robot 10 will be described. FIG. 5 is a drawing illustrating, in front view, the state of the nozzle forming surface 32 from which coating material is ejected within the coating head 31 of the coating head unit 30. As shown in FIG. 5, the coating head unit 30 comprises an unillustrated head cover, and various components, such as the coating head 31, are housed inside this head cover. It should be noted that the coating head 31 is provided with numerous nozzles 33 for ejecting coating material.

As shown in FIG. 5, on the surface of the coating head 31 on the side that ejects the coating material (the nozzle forming surface 32), opening portions of the multiple nozzles 33 are exposed. It should be noted that in the following description, the opening portions of the nozzles 33 are also referred to as nozzles 33.

Furthermore, on the nozzle forming surface 32, there are provided multiple nozzle rows 34, in which nozzles 33 are arranged in a line tilted relative to the long direction of the coating head unit 30. In the present embodiment, the nozzle rows 34 comprise first nozzle rows 34A that are present on one side (the Y2 side) in the primary scanning direction (the Y direction), and second nozzle rows 34B that are present on the other side (the Y1 side) in the primary scanning direction.

It should be noted that, when ejecting coating material, the drive timing of each of the nozzles 33 is controlled such that droplets ejected from the nozzles 33 of the second nozzle rows 34B will land between the droplets ejected from adjacent nozzles 33 of the first nozzle rows 34A. As a result, the dot density during coating can be increased.

It should be noted that the cap 93, described later, can be brought into contact with the nozzle forming surface 32 so as to create a state in which the nozzle forming surface 32 is sealed from the outside. Actuating the vacuum ejector 91, described later, in this state makes it possible to achieve the cleaning operation described later.

Furthermore, in the configuration shown in FIG. 5, the arrangement of the nozzles 33 in the first nozzle rows 34A and the arrangement of the nozzles 33 in the second nozzle rows 34B are tilted relative to the short direction (the Y direction; the primary scanning direction) of the coating head 31. However, such an arrangement of the nozzles 33 need not be employed. For example, the nozzle rows 34 may also be arranged along the short direction (the Y direction) of the coating head 31. Furthermore, in the short direction (the Y direction; the primary scanning direction) of the coating head 31, the nozzle rows 34 may be a single nozzle row 34 without being divided into the first nozzle rows 34A and the second nozzle rows 34B, or may be divided into three or more nozzle rows.

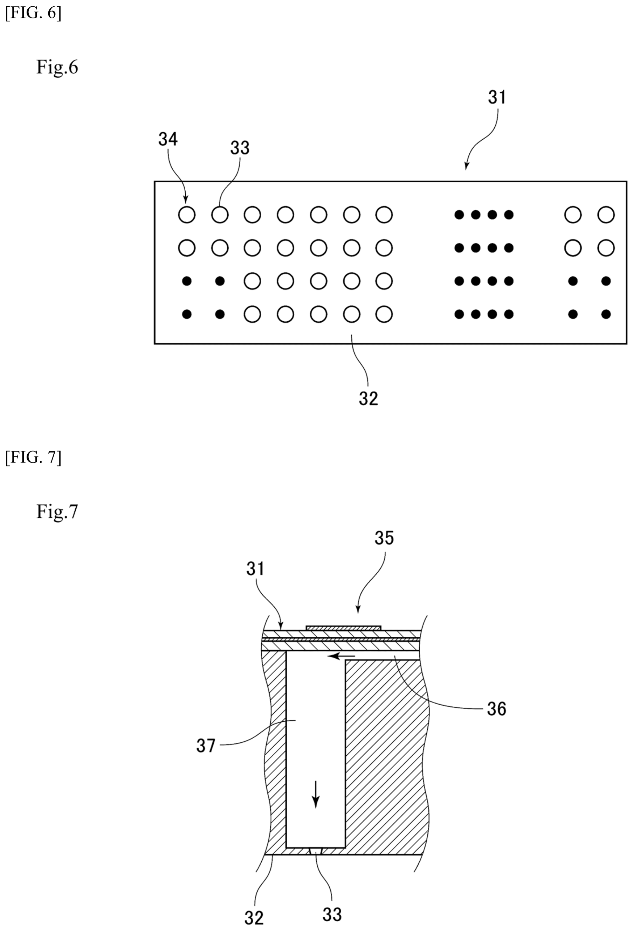

An internal flow passage 36 (see FIG. 7) for flowing coating material is provided inside the above-described coating head 31. Furthermore, inside the coating head 31, a nozzle pressurization chamber 37 (see FIG. 7) is provided, and on one of the wall surfaces of the nozzle pressurization chamber 37, a piezoelectric substrate 35 (see FIG. 7) is arranged for changing the volume of the nozzle pressurization chamber 37 so as to eject coating material from the nozzle 33. Therefore, by applying voltage to the piezoelectric substrate 35 from outside, the piezoelectric substrate 35 is made to expand and contract so as to change the volume of the nozzle pressurization chamber 37, making it possible to eject the coating material from the nozzle 33.

It should be noted that the coating head 31 is not limited to the configuration shown in FIG. 5. For example, as shown in FIG. 6, multiple nozzles 33 may be lined up along the short direction (width direction; Y direction) of the coating head 31 to form the nozzle rows 34. Furthermore, when coating is performed on a vehicle FR using a coating head 31 as shown in FIG. 6, coating may also be carried out in a state where the long direction of the coating head 31 is slightly tilted relative to the primary scanning direction of the coating head 31.

For example, in the configuration of the coating head 31 shown in FIG. 5, assuming that the nozzle rows 34 are tilted relative to the primary scanning direction by an angle α, the long direction of the coating head 31 in FIG. 6 may also be tilted by an angle α relative to the primary scanning direction of the coating head 31. When tilting in this manner, coating equivalent to that of the coating head 31 shown in FIG. 5 can be achieved simply by adjusting the ejection timing of coating material from each of the nozzles 33.

FIG. 7 is a drawing illustrating a schematic configuration for supplying coating material to each of the nozzles 33 of the coating head 31. As shown in FIG. 7, the coating head 31 has an internal flow passage 36. The internal flow passage 36 is a flow passage that supplies coating material to the nozzle pressurization chamber 37 via a coating material supply passage 52, described later. It should be noted that FIG. 7 illustrates one internal flow passage 36. However, because numerous nozzles 33 are formed in the coating head 31, the coating head 31 is provided with numerous internal flow passages 36.

Furthermore, nozzle pressurization chambers 37 are provided corresponding to the number of nozzles 33, and the coating material inside can be ejected from the nozzles 33 by driving the piezoelectric substrate 35. Furthermore, the nozzle pressurization chamber 37 is connected to a return flow passage 53, described later, via the internal flow passage 36 inside the coating head 31, such as an unillustrated nozzle discharge flow passage. Thus, the coating material that was not ejected from the nozzle 33 is returned to the return flow passage 53.

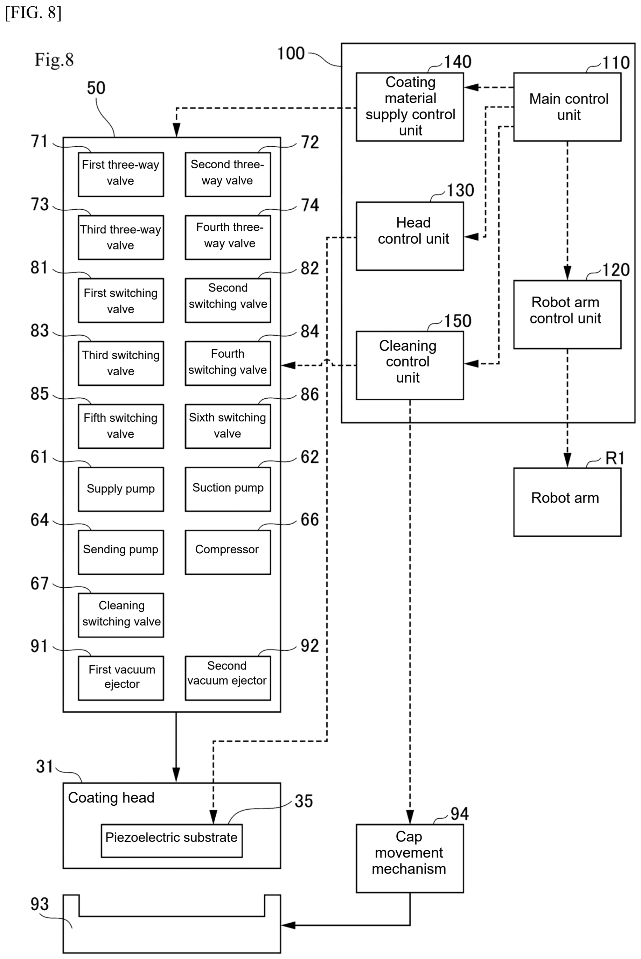

Based on such a configuration, coating material supplied from a coating material supply and cleaning mechanism 50 (see FIG. 8), described later, passes through the internal flow passage 36 and the nozzle pressurization chamber 37 and is ejected from the nozzle 33. Furthermore, the coating material that was not ejected from the nozzle 33 is returned from the nozzle pressurization chamber 37 through the internal flow passage 36 to the return flow passage 53, described later.

In the coating robot 10 and the cleaning system 1 having the configuration described above, the portion from the moving platform 16 through the robot arm R1 to the coating head unit 30 (the robot main body portion) is movable along the rail 17. On the other hand, the cleaning tank 63 and the liquid evacuation tank 65 that make up the cleaning system 1 are not mounted on the robot arm R1, but are installed at a location (such as an installation surface) where the coating robot 10 is installed. Therefore, as shown in FIG. 1, the length of the return flow passage 53 becomes longer, and the coating material supply passage 52 also often becomes longer.

In this way, in a configuration where at least the length of the return flow passage 53 becomes longer, and in many cases the length of the coating material supply passage 52 also becomes longer, during cleaning of each portion of the coating material supply and cleaning mechanism 50, the cleaning fluid discharge capacity (suction capacity), described later, becomes insufficient, often leading to decreased cleaning performance and increased cleaning time. However, the configuration as described later aims to solve problems such as decreased cleaning performance and increased cleaning time.

### (1-4. Regarding the coating material supply and cleaning mechanism 50)

Next, the coating material supply and cleaning mechanism 50 will be described. As shown in FIG. 4, the coating material supply and cleaning mechanism 50 comprises a coating material circulation passage 51, a coating material tank 57, a removal filter 58, a degassing module 59, a supply pump 61, a suction pump 62, a cleaning tank 63, a sending pump 64, a liquid evacuation tank 65, a compressor 66, a cleaning switching valve 67, first to fourth three-way valves 71 to 74, first to sixth switching valves 81 to 86, a first vacuum ejector 91, a second vacuum ejector 92, a cap 93, a cap movement mechanism 94 (see FIG. 8), and other conduits, etc.

The coating material circulation passage 51 is a flow passage for circulating the coating material, and comprises a coating material supply passage 52, a return flow passage 53, a bypass flow passage 54, an external supply passage 55, and a second bypass flow passage 56. The coating material supply passage 52 is a flow passage for supplying the coating material supplied from the external supply passage 55 or returned from the return flow passage 53 toward the coating head 31, and is connected to the internal flow passage 36 inside the coating head 31 described above.

Here, each component element of the coating material supply and cleaning mechanism 50, including the coating material circulation passage 51 described above, is capable of flowing cleaning liquid (cleaning fluid) in addition to coating material, but in the following description, it will be described as simply flowing "coating material".

The return flow passage 53 is connected to the internal flow passage 36 inside the coating head 31 described above, and is a flow passage for returning the coating material that was not ejected by the coating head 31 to the coating material tank 57.

Furthermore, the bypass flow passage 54 is a flow passage that connects the coating material supply passage 52 to the return flow passage 53. Namely, the bypass flow passage 54 is provided in parallel to the coating head 31, and when coating material ceases to be ejected from the coating head 31, the operation of the second three-way valve 72 and third three-way valve 73, described later, is switched such that the coating material flows into the bypass flow passage 54.

The external supply passage 55 is a conduit for supplying coating material supplied from the coating material storage area side, such as from a circulation tank, into the coating material tank 57.

The second bypass flow passage 56 is a flow passage connecting the first switching valve 81 and the sixth switching valve 86, and is a flow passage for forming a circulation path including the coating material tank 57 and performing cleaning in this circulation path.

The coating material tank 57 is a part for temporarily storing the coating material supplied from the external supply passage 55. It should be noted that the coating material tank 57 may have a function for removing air bubbles contained in the coating material. This coating material tank 57 is provided, for example, at a stable location outside the robot arm R1 where the attitude will not change. Furthermore, the coating material tank 57 is connected to the coating material supply passage 52 so as to be able to supply coating material thereto, and is connected to the return flow passage 53 so as to be supplied with coating material from the return flow passage 53.

The removal filter 58 removes foreign matter contained in the coating material flowing through the coating material supply passage 52. The removal filter 58 maintains normal operation of the coating head 31 by reliably removing coarse foreign matter and pigment aggregates from, for example, coating material containing pigment. It should be noted that the removal filter 58 is disposed between the second switching valve 82 and the third switching valve 83 in the coating material supply passage 52.

The degassing module 59 is arranged to the downstream side of the removal filter 58, described above, in the coating material supply passage 52, and is a member intended for removal (degassing) of dissolved gas present in solution in the coating material. It should be noted that the degassing module 59 is disposed in the coating material supply passage 52 between the third switching valve 83 and the fourth switching valve 84.

The supply pump 61 is a means for applying positive pressure toward the downstream side of the supply pump 61 to the coating material flowing through the coating material supply passage 52.

It should be noted that a gear pump whereof the rotational speed can be controlled so as to control the coating material supply rate is preferably used as the supply pump 61. In this case, by causing the supply pump 61, which is a gear pump, to rotate in reverse, it becomes possible to cause the coating material or cleaning liquid to flow in reverse. However, a pump other than a gear pump may also be used for the supply pump 61.

The suction pump 62 is a means for applying negative pressure to the upstream side of the suction pump 62 with respect to the coating material flowing through the return flow passage 53. It should be noted that the suction pump 62 corresponds to the suction means.

A gear pump whereof the rotational speed can be controlled so as to control the coating material supply rate is preferably used also as the suction pump 62, just as in the case of the supply pump 61 described above. In this case, by causing the suction pump 62, which is a gear pump, to rotate in reverse, it becomes possible to cause the coating material or cleaning liquid to flow in reverse. However, a pump other than a gear pump may also be used for the suction pump 62.

The cleaning tank 63 is a part that stores cleaning liquid, and is a part that supplies cleaning liquid used when cleaning the various parts of the coating material supply and cleaning mechanism 50 and the coating head 31. The sending pump 64 is a part that draws in the cleaning liquid stored in the cleaning tank 63 and sends out the drawn-in cleaning liquid to the cleaning switching valve 67. It should be noted that the sending pump 64 corresponds to the pressurization means.

Furthermore, the liquid evacuation tank 65 is a part for storing cleaning liquid (evacuated liquid) discharged after cleaning the various parts of the coating material supply and cleaning mechanism 50 and the coating head 31.

The compressor 66 is a part that sends out cleaning air toward the cleaning switching valve 67. Furthermore, the cleaning switching valve 67 comprises a plurality of valve parts including, for example, a valve part 67a to which a flow passage extending from the cleaning tank 63 is connected, a valve part 67b to which a flow passage extending from the compressor 66 is connected, and a valve part 67c to which a flow passage extending to each of the first to sixth switching valves 81 to 86, described later, is connected. These plurality of valve parts are individually controlled to open and close by a cleaning control unit 150, described later. Through such opening and closing control, the cleaning liquid from the cleaning tank 63 and the air from the compressor 66 are alternately sent into the coating material supply passage 52 or the return flow passage 53 in the coating material circulation passage 51.

Furthermore, the first three-way valve 71 is disposed between the coating material tank 57 and the first switching valve 81 in the coating material supply passage 52, and also has connected to it a branch passage (reference numeral omitted) going toward the liquid evacuation tank 65. This first three-way valve 71 can shut off the flow of coating material or cleaning liquid to any one of (a) the coating material tank 57 side, (b) the first switching valve 81 side, and (c) the liquid evacuation tank 65 side. Therefore, coating material or cleaning liquid can flow in the remaining two flow passages that have not been shut off (the same applies to the second to fourth three-way valves 72 to 74 in the following description).

Similarly, the second three-way valve 72 is disposed between the fourth switching valve 84 and the coating head 31, and one end side of the bypass flow passage 54 is furthermore connected thereto. This second three-way valve 72 can shut off flow of coating material or cleaning liquid to any one of (a) the fourth switching valve 84 side, (b) the coating head 31 side, and (c) the bypass flow passage 54 side.

Furthermore, the third three-way valve 73 is disposed between the coating head 31 and the fifth switching valve 85, and the other end side of the bypass flow passage 54 is connected thereto. This third three-way valve 73 can shut off flow of coating material or cleaning liquid to any one of (a) the coating head 31 side, (b) the fifth switching valve 85 side, and (c) the bypass flow passage 54 side.

Furthermore, the fourth three-way valve 74 is disposed between the sixth switching valve 86 and the coating material tank 57, and a branch passage (reference numeral omitted) going toward the liquid evacuation tank 65 is connected thereto. This fourth three-way valve 74 can shut off the flow of coating material or cleaning liquid to any one of (a) the sixth switching valve 86 side, (b) the coating material tank 57 side, and (c) the liquid evacuation tank 65 side.

Furthermore, the first switching valve 81 is disposed between the first three-way valve 71 and the second switching valve 82 in the coating material supply passage 52. This first switching valve 81 has four valve parts 81a to 81d, and can switch the flow passages of liquid (coating material, cleaning liquid) and air (air used during cleaning) according to the open/closed state of these valve parts 81a to 81d. Specifically, the valve part 81a is connected to the upstream side of the coating material supply passage 52, and the valve part 81b is connected to the downstream side of the coating material supply passage 52. Furthermore, the valve part 81c is connected to the cleaning switching valve 67 that can be switchably connected to the cleaning tank 63 or the compressor 66. Furthermore, the valve part 81d is connected to the second bypass flow passage 56 side.

Therefore, when supplying coating material from the coating material tank 57 toward the coating head 31, or when circulating the coating material, the valve part 81a and the valve part 81b are opened, and the coating material from the coating material tank 57 flows to the downstream side of the coating material supply passage 52. Furthermore, during cleaning, when one of the valve parts from among the valve part 81a and the valve part 81b described above and the valve part 81c are opened, the cleaning liquid supplied from the cleaning tank 63 or the air supplied from the compressor 66 flows via the opened valve part to the flow passage connected to the valve part. It should be noted that, in the following description, material including at least one of the cleaning liquid and the air used during cleaning will be described as "cleaning fluid".

Furthermore, the valve part 81d is connected via the second bypass flow passage 56 to a valve part 86d of a sixth switching valve 86, described later, that is arranged in the return flow passage 53. Therefore, for example, by opening the valve part 81a and the valve part 81d, a circulation path is formed in which the upstream side of the coating material supply passage 52 (the side connected to the coating material tank 57), the second bypass flow passage 56, and the downstream side of the return flow passage 53 (the side connected to the coating material tank 57) are connected.

Furthermore, the second switching valve 82 is connected to the coating material supply passage 52 on the downstream side of the first switching valve 81 and on the upstream side of the removal filter 58. This second switching valve 82, just as the first switching valve 81 described above, has four valve parts 82a to 82d, and according to the open/closed state of the valve parts 82a to 82d, the flow passages for liquid (coating material, cleaning liquid) and gas (air used during cleaning) can be switched. Specifically, the valve part 82a is connected to the upstream side of the coating material supply passage 52, and the valve part 82b is connected to the downstream side of the coating material supply passage 52. Furthermore, the valve part 82c is connected to the cleaning switching valve 67 that can be switchably connected to the cleaning tank 63 or the compressor 66. Furthermore, the valve part 82d is connected via the vacuum ejector 91 to the liquid evacuation tank 65 side.

Therefore, when supplying coating material from the coating material tank 57 toward the coating head 31, or when circulating the coating material, the valve part 82a and the valve part 82b are opened, and the coating material from the coating material tank 57 flows to the downstream side of the coating material supply passage 52. Furthermore, during cleaning, when one of the valve parts from among the valve part 82a and the valve part 82b described above and the valve part 82c are opened, the cleaning fluid flows via the opened valve part to the flow passage connected to the valve part.

Furthermore, the third switching valve 83 is connected to the coating material supply passage 52 on the downstream side of the second switching valve 82 and the removal filter 58, and on the upstream side of the degassing module 59. This third switching valve 83, just as the first switching valve 81 described above, has four valve parts 83a to 83d, and according to the open/closed state of the valve parts 83a to 83d, the flow passages for liquid (coating material, cleaning liquid) and gas (air used during cleaning) can be switched. Specifically, the valve part 83a is connected to the upstream side of the coating material supply passage 52, and the valve part 83b is connected to the downstream side of the coating material supply passage 52. Furthermore, the valve part 83c is connected to the cleaning switching valve 67 that can be switchably connected to the cleaning tank 63 or the compressor 66. Furthermore, the valve part 83d is connected to the liquid evacuation tank 65 side.

Therefore, when supplying coating material from the coating material tank 57 toward the coating head 31, or when circulating the coating material, the valve part 83a and the valve part 83b are opened, and the coating material from the coating material tank 57 flows to the downstream side of the coating material supply passage 52. Furthermore, during cleaning, when one of the valve parts from among the valve part 83a and the valve part 83b described above and the valve part 83c are opened, the cleaning fluid flows via the opened valve part to the flow passage connected to the valve part.

Furthermore, the fourth switching valve 84 is connected to the coating material supply passage 52 downstream of the third switching valve 83 and the degassing module 59 and upstream of the second three-way valve 72. Unlike the first switching valve 81 described above, the fourth switching valve 84 has six valve parts 84a to 84f, and the flow passages for liquid (coating material, cleaning liquid) and gas (air used during cleaning) can be switched according to the open/closed state of the valve parts 84a to 84f.

Specifically, the valve part 84a is connected to the upstream side of the coating material supply passage 52, and the valve part 84b is connected to the downstream side of the coating material supply passage 52. Therefore, when the valve part 84a and the valve part 84b are opened, the coating material from the upstream side of the coating material supply passage 52 flows toward the second three-way valve 72 on the downstream side of the coating material supply passage 52. Furthermore, the valve part 84a is also connected to the valve part 84f independently of the valve parts 84b, 84c, and 84e. Therefore, when the valve part 84c or 84e and the valve part 84b are opened and cleaning liquid or air, or coating material is flowing through these valve parts, the valve part 84a can connect with the valve part 84f independently of this flow.

Furthermore, the valve part 84c is connected to the cleaning switching valve 67 that can be switchably connected to the cleaning tank 63 or the compressor 66. Therefore, during cleaning, when the valve part 84a or the valve part 84b described above and the valve part 84c are opened, the cleaning fluid flows via the opened valve parts to the flow passages connected to those valve parts.

Furthermore, the valve part 84d is connected to the cleaning switching valve 67 described above separately and independently from the valve part 84c described above. The flow passage of the valve part 84d is not connected to the valve parts 84b, 84c, and 84e, and is connected only to the valve part 84a and the valve part 84f. For example, when the valve part 84d and the valve part 84f are opened, the cleaning fluid flows to the liquid evacuation tank 65 via the opened valve part 84f.

Furthermore, the valve part 84e is connected to the liquid evacuation tank 65 via the first vacuum ejector 91, described later. Therefore, when one of the valve part 84a or the valve part 84b described above is opened, and the first vacuum ejector 91 is actuated with the valve part 84e in an opened state, spent cleaning fluid is discharged to the liquid evacuation tank 65 via the valve part 84e and the vacuum ejector 91.

Furthermore, the valve part 84f is also connected to the liquid evacuation tank 65. The flow passage of the valve part 84f is not connected to the valve parts 84b, 84c, and 84e, but is connected to the valve part 84a and the valve part 84d. When the valve part 84a and the valve part 84f are opened, the coating material effluent from the upstream side of the coating material supply passage 52 flows to the liquid evacuation tank 65 via the valve part 84a and the valve part 84f.

Furthermore, the fifth switching valve 85 is connected to the return flow passage 53 downstream of the third three-way valve 73 and upstream of the suction pump 62. Just as the fourth switching valve 84 described above, the fifth switching valve 85 also has six valve parts 85a to 85f, and the flow passages for liquid (coating material, cleaning liquid) and air can be switched according to the open/closed state of the valve parts 85a to 85f.

Specifically, the valve part 85a is connected to the upstream side of the return flow passage 53, and the valve part 85b is connected to the downstream side of the return flow passage 53. Therefore, when the valve part 85a and the valve part 85b are opened, the coating material from the upstream side of the return flow passage 53 flows toward the suction pump 62 on the downstream side of the return flow passage 53. Furthermore, the valve part 85b is connected to the valve part 85f independently of the valve parts 85a, 85c, and 85e. Therefore, when the valve part 85c or 85e and the valve part 85b are opened and the cleaning fluid or coating material is flowed through these valve parts, the valve part 85b can connect to the valve part 85f independently of this flow.

Furthermore, the valve part 85c is connected to the cleaning switching valve 67. Therefore, during cleaning, when one of the valve parts from among the valve part 85a or the valve part 85b described above and the valve part 85c are opened, the cleaning fluid flows via the opened valve part to the flow passage connected to the valve part.

Furthermore, the valve part 85d is connected to the cleaning switching valve 67 separately and independently from the valve part 85c described above. The flow passage of the valve part 85d is not connected to the valve parts 85a, 85c, and 85e, and is connected only to the valve part 85b and the valve part 85f. For example, when the valve part 85d and the valve part 85f are opened, the cleaning fluid flows to the liquid evacuation tank 65 via the opened valve part 85f.

Furthermore, the valve part 85e is connected to the liquid evacuation tank 65 via a second vacuum ejector 92, described later. Therefore, when one of the valve part 85a or the valve part 85b described above is opened, and the second vacuum ejector 92 is actuated with the valve part 85e in an opened state, the spent cleaning fluid is discharged to the liquid evacuation tank 65 via the valve part 85e and the second vacuum ejector 92.

Furthermore, the valve part 85f is connected to the valve parts 85b and 85d and the liquid evacuation tank 65. The flow passage of the valve part 85f is not connected to the valve parts 85a, 85c, and 85e, and is connected to the valve part 85b and the valve part 85d. When the valve part 85b and the valve part 85f are opened, the coating material effluent on the downstream side of the return flow passage 53 flows to the liquid evacuation tank 65 via the valve part 85b and the valve part 85f.

Furthermore, the sixth switching valve 86 is arranged between the suction pump 62 and the fourth three-way valve 74 in the return flow passage 53. The sixth switching valve 86 has four valve parts 86a to 86d, and the flow passages for liquid (coating material, cleaning liquid) and air can be switched according to the open/closed state of the valve parts 86a to 86d. Specifically, the valve part 86a is connected to the upstream side of the return flow passage 53, and the valve part 86b is connected to the downstream side of the return flow passage 53. Furthermore, the valve part 86c is connected to the cleaning switching valve 67 that can be switchably connected to the cleaning tank 63 or the compressor 66. Furthermore, the valve part 86d is connected to the second bypass flow passage 56 side.

Therefore, when supplying the coating material from the coating material tank 57 toward the coating head 31, or when circulating the coating material, the valve part 86a and the valve part 86b are opened, and the coating material from the coating head 31 side (upstream side) flows toward the downstream side of the return flow passage 53. Furthermore, during cleaning, when one of the valve part 86a and the valve part 86b described above and the valve part 86c are opened, the cleaning fluid flows via the opened valve part to the flow passage connected to that valve part.

Furthermore, as described above, the valve part 86d is connected to the valve part 81d of the first switching valve 81 via the second bypass flow passage 56. Therefore, when the valve part 81a and the valve part 81d of the first switching valve 81 are opened, and the valve part 86d and the valve part 86b of the sixth switching valve 86 are opened, the second bypass flow passage 56 connecting the valve part 81d and the valve part 86d opens. As a result, a circulation passage is formed in which the coating material circulates through the coating material tank 57, the first switching valve 81, the second bypass flow passage 56, and the sixth switching valve 86 in that order.

Furthermore, the first vacuum ejector 91 is arranged in the middle of the conduit connecting the valve part 84e described above and the liquid evacuation tank 65. The first vacuum ejector 91 is a device that discharges fluid by generating a vacuum. When the first vacuum ejector 91 is actuated, if the valve part 84b and the valve part 84e are opened, the coating material or cleaning fluid can be discharged from the coating head 31 side at a predetermined pressure.

Furthermore, the second vacuum ejector 92 is arranged in the middle of the conduit connecting the valve part 85e described above and the liquid evacuation tank 65. The second vacuum ejector 92, similarly to the first vacuum ejector 91 described above, is a device that discharges fluid by generating a vacuum. When the second vacuum ejector 92 has been actuated, if the valve part 85a and the valve part 85e are opened, the coating material or cleaning fluid can be discharged from the coating head 31 side at a predetermined pressure.

It should be noted that the first vacuum ejector 91 and the second vacuum ejector 92 are provided so that the suction force will be sufficiently higher than that of the suction pump 62. More specifically, the actuation of the first vacuum ejector 91 and the second vacuum ejector 92 is controlled by the cleaning control unit 150 so that the negative pressure during suction by the first vacuum ejector 91 and the second vacuum ejector 92 is greater than the negative pressure during suction by the suction pump 62. However, the negative pressure during suction by the first vacuum ejector 91 and the second vacuum ejector 92 may also be approximately the same as or less than the negative pressure during suction by the suction pump 62.

It should be noted that at least one of the first vacuum ejector 91 and the second vacuum ejector 92 corresponds to the cleaning suction means. Furthermore, one of either the first vacuum ejector 91 or the second vacuum ejector 92 corresponds to the first cleaning suction means, and the other one of either the first vacuum ejector 91 or the second vacuum ejector 92 corresponds to the second cleaning suction means.

The cap 93 is a member that establishes tight contact with the nozzle forming surface 32 to seal the nozzle forming surface 32 where the nozzles 33 are exposed. The cap 93 is preferably formed from a flexibly deformable member such as, for example, rubber. Furthermore, the cap 93 may also be configured to form a slight space (internal space) between itself and the nozzle forming surface 32, and to be capable of discharging coating material droplets into the internal space. At this time, it is preferable that the peripheral wall forming the internal space of the cap 93 does not directly contact the location on the nozzle forming surface 32 where the nozzles 33 are formed. Furthermore, it is preferable that a discharge conduit capable of discharging coating material droplets be connected to the cap 93.

Furthermore, the cap movement mechanism 94 is a mechanism for moving the cap 93 described above to seal the nozzle forming surface 32 or to release the seal. The cap movement mechanism 94 may be provided as an independent mechanism comprising a drive source such as a motor or actuator, and a transmission mechanism such as a cam or gear that transmits driving force from the drive source. However, for the cap movement mechanism 94, a robot arm R1 that is capable of moving the coating head 31 (coating head unit 30) relative to the cap 93 may also be used as the cap movement mechanism 94.

### (1-5. Control unit 100)

Next, the schematic configuration of the control unit 100 for controlling the operation of the cleaning system 1 of the coating robot 10 will be described. FIG. 8 is a drawing illustrating a schematic control configuration centered on the control unit 100 of the cleaning system 1 of the coating robot 10. As shown in FIG. 8, the control unit 100 comprises a main control unit 110, a robot arm control unit 120, a head control unit 130, a coating material supply control unit 140, and a cleaning control unit 150. It should be noted that at least one of the control unit 100, the main control unit 110, and the cleaning control unit 150 corresponds to the control means.

Among the control elements described above, during execution of coating, the main control unit 110 transmits predetermined control signals to the robot arm control unit 120, the head control unit 130, and the coating material supply control unit 140 described above, as may be necessary, so that coating is executed on the object to be coated through cooperation of each motor of the robot arm R1, each operating part of the coating material supply and cleaning mechanism 50, and the piezoelectric substrate 35.

During execution of cleaning, the main control unit 110 transmits predetermined control signals to the robot arm control unit 120, the head control unit 130, the coating material supply control unit 140, and the cleaning control unit 150 described above, as may be necessary, so that each motor of the robot arm R1, each operating part of the coating material supply and cleaning mechanism 50, and the piezoelectric substrate 35 cooperate to execute coating on the object to be coated.

The robot arm control unit 120 is a part that controls the driving of each motor of the robot arm R1 described above.

The head control unit 130 is a part that controls the actuation of the piezoelectric substrate 35 inside the coating head unit 30 based on image processing by an unillustrated image processing device. Furthermore, the head control unit 130 may also control the actuation of the piezoelectric substrate 35 when executing cleaning inside the coating head 31, as may be necessary.

The coating material supply control unit 140 is a part that controls the supply of coating material to the coating head 31, and specifically controls the operation of each operating element in the coating material supply and cleaning mechanism 50, such as the supply pump 61, the suction pump 62, the first to fourth three-way valves 71 to 74, and the first to sixth switching valves 81 to 86.

The cleaning control unit 150 is a part that controls the actuation of the relevant operating elements when executing cleaning of the internal flow passages 36 within the coating head 31 and each component element inside the coating material circulation passage 51 with cleaning fluid (cleaning liquid or air). Specifically, the cleaning control unit 150 controls the actuation of each operating element in the coating material supply and cleaning mechanism 50, such as the supply pump 61, the suction pump 62, the sending pump 64, the compressor 66, the cleaning switching valve 67, the first to fourth three-way valves 71 to 74, the first to sixth switching valves 81 to 86, the first vacuum ejector 91, the second vacuum ejector 92, and the cap movement mechanism 94.

### (2. Control during cleaning)

Next, details of the control during cleaning of the internal flow passages 36 inside the coating head 31 will be described.

### (2-1. Forward direction cleaning)

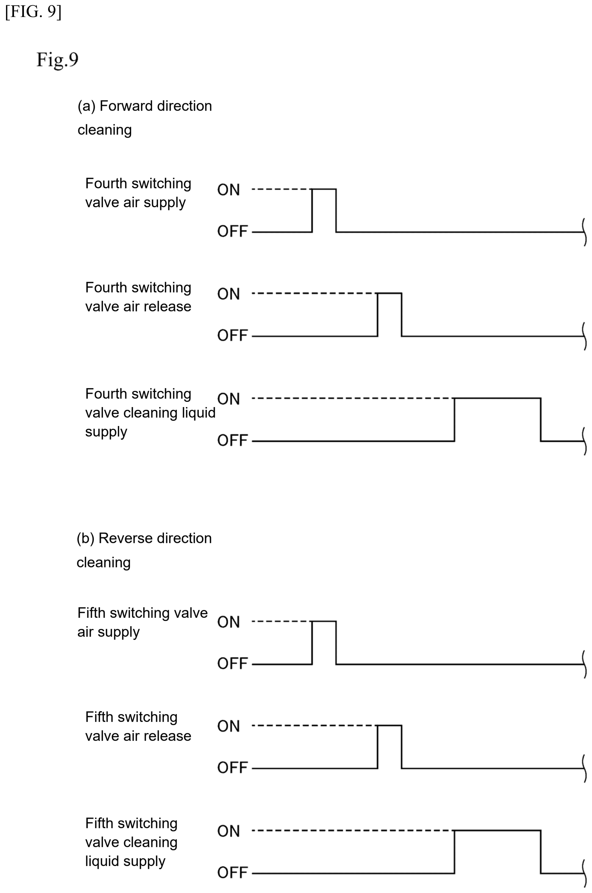

First, forward direction cleaning will be described. FIG. 9 is a diagram showing a cleaning chart for the cleaning of the internal flow passages 36 inside the coating head 31. In this forward direction cleaning, cleaning fluid such as cleaning liquid or air is supplied from the coating material supply passage 52 toward the coating head 31, just as during normal coating. In this case, based on a command from the main control unit 110, the cleaning control unit 150 switches the cleaning switching valve 67 so as to open the valve part 67b while closing the valve part 67a. Furthermore, the cleaning control unit 150 actuates the second three-way valve 72 so as to shut off the flow of cleaning fluid toward the bypass flow passage 54 side, and further actuates the third three-way valve 73 so as to shut off the supply of cleaning fluid from the bypass flow passage 54.

Furthermore, the cleaning control unit 150 actuates the compressor 66 to establish a ready state in which cleaning air can be supplied toward the valve part 67c. Furthermore, separately from the above, the cleaning control unit 150 actuates the cap movement mechanism 94 to bring the cap 93 into tight contact with the nozzle forming surface 32. As a result, the nozzle forming surface 32 (nozzles 33) is sealed from the outside.

After this, the cleaning control unit 150 switches the fourth switching valve 84 so as to open the valve parts 84b and 84c while closing the other valve parts 84a, 84d, 84e, and 84f. Furthermore, the cleaning control unit 150 switches the fifth switching valve 85 so as to open the valve parts 85a and 85e while closing the other valve parts 85b, 85c, 85d, and 85f.

Then, the cleaning air flows via the valve parts 67b, 67c and the valve parts 84b, 84c for a predetermined time period (for example, 0.5 seconds) (air supply ON in FIG. 9(a)). After that, either the valve part 84b or the valve part 84c is shut off so as to shut off the supply of air (air supply OFF in FIG. 9(a)). After this, it is preferable to open the valve part 84e to release the air and adjust the pressure (release ON in FIG. 9(a)). At this time, the pressure of the air is preferably 0.3 to 0.4 bar. However, the pressure may also be outside this range. In particular, when using a coating head 31 provided with high pressure resistance, it is preferable to set the pressure range higher than the above.

Next, the cleaning control unit 150 actuates the sending pump 64 to establish a ready state in which cleaning liquid can be supplied. After this, the cleaning control unit 150 opens the valve parts 84b and 84c while placing the other valve parts 84a, 84d, 84e, and 84f into a closed state, and furthermore switches the cleaning switching valve 67 so as to open the valve part 67a while closing the valve part 67b.

Then, the cleaning liquid flows via the valve parts 67a and 67c and the valve parts 84b and 84c for a predetermined time period (for example, 15 seconds) (supply of cleaning liquid ON in FIG. 9(a)). After that, either the valve part 84b or the valve part 84c is shut off so as to shut off the supply of the cleaning liquid (supply of cleaning liquid OFF in FIG. 9(a)). In this manner, the cleaning liquid is supplied via the coating material supply passage 52 to the internal flow passages 36 of the coating head 31. At this time, the pressure of the cleaning liquid is preferably 0.3 to 0.4 bar. However, the pressure may also be outside this range. In particular, when using a coating head 31 provided with high pressure resistance, it is preferable to set the pressure range higher than the above.

Then, the air or cleaning liquid that has cleaned the internal flow passages 36 is discharged to the liquid evacuation tank 65 via the return flow passage 53 and the valve parts 85a and 85e. For this discharge, the cleaning control unit 150 actuates the second vacuum ejector 92 to discharge the cleaning liquid or air after cleaning to the liquid evacuation tank 65 by negative pressure. It is thereby possible to increase the amount of cleaning liquid or air drawn into the internal flow passages 36.

In this manner, cleaning liquid and air at a predetermined pressure are alternately supplied to the internal flow passages 36 at a predetermined pressure via the coating material supply passage 52. In this way, forward direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, actuating the second vacuum ejector 92 makes it possible to improve the discharge performance of the spent cleaning fluid, even when the return flow passage 53 and the coating material supply passage 52 become longer, as compared to the case where the cleaning fluid is discharged only by actuation of the sending pump 64.

In particular, when discharging the spent cleaning fluid via the valve part 85e of the fifth switching valve 85, because the fluid does not go through the suction pump 62, in a configuration that does not use the second vacuum ejector 92 as a comparative example, the only driving element for discharging the spent cleaning fluid is the sending pump 64, and the discharge performance with respect to spent cleaning fluid tends to decrease.

However, as described above, by providing the second vacuum ejector 92 and discharging the spent cleaning fluid by actuation of the second vacuum ejector 92 in addition to actuation of the sending pump 64, the discharge performance for cleaning fluid after cleaning can be improved compared to the case where only the sending pump 64 is actuated. Namely, during forward direction cleaning, this makes it possible to suppress deterioration in cleaning performance and increase in cleaning time of the coating material circulation passage 51 even when the return flow passage 53 and the coating material supply passage 52 become longer.

It should be noted that, if the forward direction cleaning of the internal flow passages 36 using air and cleaning liquid as described above is taken as one cycle, it is preferable to repeat such a cleaning cycle two or more times.

### (2-2. Reverse direction cleaning)

Next, reverse direction cleaning will be described. In this reverse direction cleaning, cleaning fluid such as cleaning liquid and air is supplied to the coating head 31 in a direction reverse to the forward direction cleaning described above. In this case, based on a command from the main control unit 110, the cleaning control unit 150 switches the cleaning switching valve 67 so as to open the valve part 67b while closing the valve part 67a. Furthermore, the cleaning control unit 150 actuates the second three-way valve 72 so as to shut off the flow of cleaning fluid toward the bypass flow passage 54 side, and further actuates the third three-way valve 73 so as to shut off the supply of cleaning fluid from the bypass flow passage 54.

Furthermore, the cleaning control unit 150 actuates the compressor 66 to establish a ready state in which cleaning air can be supplied toward the valve part 67c. Furthermore, separately from the above, the cleaning control unit 150 actuates the cap movement mechanism 94 to bring the cap 93 into tight contact with the nozzle forming surface 32. As a result, the nozzle forming surface 32 (nozzles 33) is sealed from the outside.

After this, the cleaning control unit 150 switches the fifth switching valve 85 so as to open the valve parts 85a and 85c while closing the other valve parts 85b, 85d, 85e, and 85f. Furthermore, the cleaning control unit 150 switches the fourth switching valve 84 so as to open the valve parts 84b and 84e while closing the other valve parts 84a, 84c, 84d, and 84f.

Then, the cleaning air flows via the valve parts 67b and 67c and the valve parts 85a and 85c for a predetermined time period (for example, 0.5 seconds) (air supply ON in FIG. 9(b)). After that, either the valve part 85a or the valve part 85c is shut off so as to shut off the supply of the air (air supply OFF in FIG. 9(b)). After this, it is preferable to open the valve part 85e to release the air and adjust the pressure (release ON in FIG. 9(b)).

Next, the cleaning control unit 150 actuates the sending pump 64 to establish a ready state in which cleaning liquid can be supplied. After this, the cleaning control unit 150 switches the cleaning switching valve 67 so as to open the valve part 67a while closing the valve part 67b in a state in which the valve parts 85a and 85c are open while the other valve parts 85b, 85d, 85e, and 85f are closed.

Then, the cleaning liquid flows via the valve parts 67a and 67c and the valve parts 85a and 85c for a predetermined time period (for example, 15 seconds) (cleaning liquid supply ON in FIG. 9(b)). After that, either the valve part 85a or the valve part 85c is shut off so as to shut off the supply of the cleaning liquid (cleaning liquid supply OFF in FIG. 9(b)). In this manner, the cleaning liquid is supplied via the coating material supply passage 52 to the internal flow passages 36 of the coating head 31.

Then, the air or cleaning liquid that has cleaned the internal flow passages 36 is discharged to the liquid evacuation tank 65 via the coating material supply passage 52 and the valve parts 84b and 84e. In this discharge, the cleaning control unit 150 actuates the first vacuum ejector 91 to discharge the cleaning liquid or air after cleaning to the liquid evacuation tank 65 by negative pressure. It is thereby possible to increase the amount of cleaning liquid or air drawn into the internal flow passages 36.

In this manner, air at a predetermined pressure and cleaning liquid are alternately supplied to the internal flow passages 36 at a predetermined pressure via the return flow passage 53. In this way, reverse direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, as described above, in addition to the actuation of the sending pump 64, by also discharging the spent cleaning fluid through the actuation of the first vacuum ejector 91, the discharge performance of the cleaning fluid after cleaning can be improved compared to the case where only the sending pump 64 is actuated. Namely, during reverse direction cleaning, this makes it possible to suppress deterioration of the cleaning performance of the coating material circulation passage 51 and increase in cleaning time, even when the return flow passage 53 or the coating material supply passage 52 becomes longer.

It should be noted that, if the reverse direction cleaning of the internal flow passages 36 using air and cleaning liquid as described above is taken as one cycle, it is preferable to repeat such a cleaning cycle two or more times.

### (3. Modified examples)

### (3-1. Cleaning when there is one vacuum ejector)

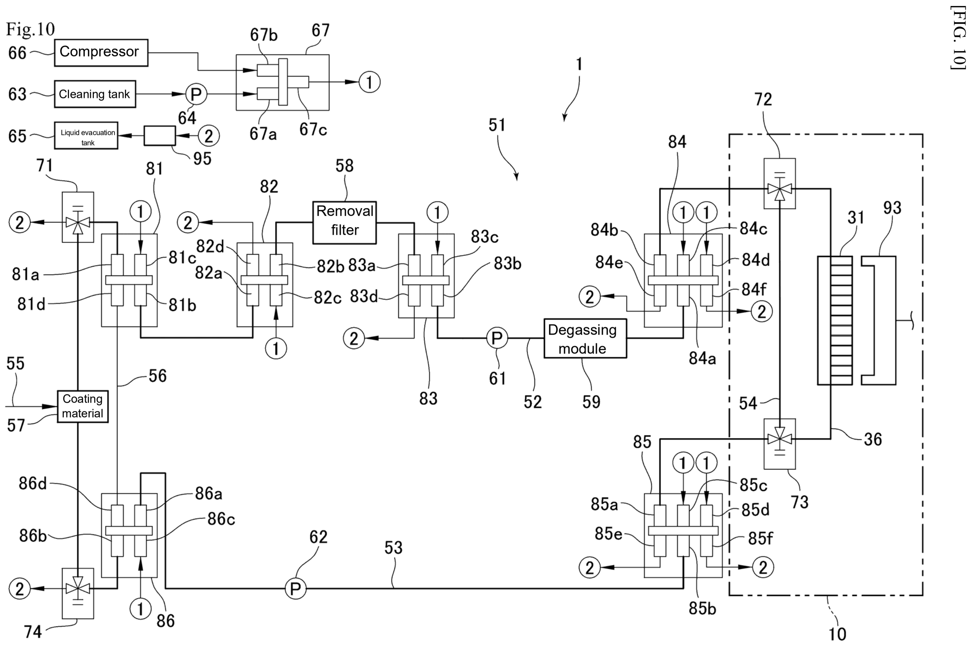

In the embodiment described above, two vacuum ejectors, the first vacuum ejector 91 and the second vacuum ejector 92, are used as the vacuum ejector. However, it is also possible to perform forward direction cleaning and reverse direction cleaning using one vacuum ejector. In this case, it is possible to perform cleaning individually for each cleaning target section. Hereinafter, this case will be described based on FIG. 10. It should be noted that in FIG. 10, the description will refer to the one vacuum ejector as vacuum ejector 95. Here, the vacuum ejector 95 corresponds to a cleaning suction means, and also corresponds to one of either the first cleaning suction means or the second cleaning suction means. However, the first to sixth switching valves 81 to 86 may be included in the cleaning suction means, or in any one of either the first cleaning suction means or the second cleaning suction means.

### (3-1a. Forward direction cleaning)

First, forward direction cleaning will be described. Here, a case will be described where the cleaning target is the internal flow passages 36 of the coating head 31, the coating material supply passage 52 going toward the internal flow passages 36, and the first section of the return flow passage 53 through which the cleaning fluid discharged from the internal flow passages 36 flows. First, the cleaning control unit 150 controls the actuation of the first to third three-way valves 71 to 73, the compressor 66, the cleaning switching valve 67, and the cap movement mechanism 94 in the same manner as in the embodiment described above. After this, the fourth switching valve 84 is switched so as to open the valve parts 84b and 84c while closing the other valve parts 84a, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the subsequent cleaning are the same as in the case of "2-1. Forward direction cleaning" described above, so description of the details will be omitted.

Then, the air or cleaning liquid that has cleaned the internal flow passages 36 is discharged to the liquid evacuation tank 65 via the return flow passage 53 and the valve parts 85a and 85e. In this discharge, the cleaning control unit 150 actuates the vacuum ejector 95 to discharge the cleaning liquid or air after cleaning to the liquid evacuation tank 65 by negative pressure. In this way, compared to the case where the suction pump 62 is actuated, it is possible to increase the amount of cleaning liquid or air drawn into the internal flow passages 36.

Here, the cleaning control unit 150 may, for example, actuate the cap movement mechanism 94 to adjust the state of tight contact of the cap 93 with respect to the nozzle forming surface 32, and further control the actuation of the vacuum ejector 95 to change the negative pressure due to the actuation of the vacuum ejector 95, thereby making variable the ratio between the amount of the cleaning fluid flowing through the internal flow passages 36 that is ejected from the nozzles 33 and the amount that passes through the internal flow passages 36 without being ejected from the nozzles 33.

That is, in a state where the cap 93 is not in complete tight contact with the nozzle forming surface 32, the cleaning fluid will leak out from the nozzles 33 to a predetermined extent. In this leaking state, if the negative pressure due to the actuation of the vacuum ejector 95 changes, the amount of cleaning fluid leaking out from the nozzles 33 can be adjusted to an appropriate ratio. Therefore, in cases where it is preferable to directly discharge foreign matter from the nozzles 33 using the cleaning fluid, this can be accommodated by adjusting the amount of cleaning fluid ejected from the nozzles 33.

In the above manner, cleaning liquid and air at a predetermined pressure are alternately supplied to the internal flow passages 36 at a predetermined pressure via the coating material supply passage 52. In this way, forward direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, actuating the vacuum ejector 95 makes it possible to improve the discharge performance of the spent cleaning fluid, even when the return flow passage 53 and the coating material supply passage 52 become longer, as compared to the case where the cleaning fluid is discharged only by actuation of the sending pump 64.

In particular, when discharging the spent cleaning fluid via the valve part 85e of the fifth switching valve 85, because the fluid does not go through the suction pump 62, in a configuration that does not use the vacuum ejector 95 as a comparative example, the only driving element for discharging the spent cleaning fluid is the sending pump 64, and the discharge performance with respect to spent cleaning fluid tends to decrease.

However, as described above, by providing the vacuum ejector 95 and discharging the spent cleaning fluid by actuation of the vacuum ejector 95 in addition to actuation of the sending pump 64, the discharge performance with respect to cleaning fluid after cleaning can be improved compared to the case where only the sending pump 64 is actuated. Namely, during forward direction cleaning, this makes it possible to suppress deterioration in cleaning performance and increase in cleaning time of the coating material circulation passage 51 even when the return flow passage 53 and the coating material supply passage 52 become longer.

It should be noted that, if the forward direction cleaning of the internal flow passages 36 using air and cleaning liquid as described above is taken as one cycle, it is preferable to repeat such a cleaning cycle two or more times.

Furthermore, in the case where the cleaning target is a second section that includes the degassing module 59 in addition to the first section in which the main cleaning target is the internal flow passages 36 as described above, the cleaning control unit 150 switches the third switching valve 83 so as to open the valve parts 83b and 83c while closing the other valve parts 83a and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

Furthermore, in the case where the cleaning target is a third section that includes the removal filter 58 in addition to the second section in which the main cleaning target is the internal flow passages 36 and the degassing module 59 as described above, the second switching valve 82 is switched so as to open the valve parts 82b and 82c while closing the other valve parts 82a and 82d. Furthermore, the cleaning control unit 150 switches the third switching valve 83 so as to open the valve parts 83a and 83b while closing the other valve parts 83c and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

Furthermore, in the case where the cleaning target is a fourth section that also includes the coating material supply passage 52 between the first switching valve 81 and the second switching valve 82 in addition to the third section in which the main cleaning target is the internal flow passages 36, the degassing module 59, and the removal filter 58 as described above, the first switching valve 81 is switched so as to open the valve parts 81b and 81c while closing the other valve parts 81a and 81d. Furthermore, the cleaning control unit 150 switches the second switching valve 82 so as to open the valve parts 82a and 82b while closing the other valve parts 82c and 82d. Furthermore, the cleaning control unit 150 switches the third switching valve 83 so as to open the valve parts 83a and 83b while closing the other valve parts 83c and 83d. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the fifth switching valve 85 so as to open the valve parts 85a and 85e while closing the other valve parts 85b, 85c, 85d, and 85f.

It should be noted that the details of the cleaning thereafter are the same as in the case of the first section described above, and therefore description of the details will be omitted.

### (3-1b. Reverse direction cleaning)

Next, reverse direction cleaning will be described. In this reverse direction cleaning, cleaning fluid such as cleaning liquid and air is supplied to the coating head 31 in a direction reverse to the forward direction cleaning described above. Here, a case will be described where the cleaning target is the internal flow passages 36 of the coating head 31, the coating material supply passage 52 going toward the internal flow passages 36, and the first section of the return flow passage 53 through which the cleaning fluid discharged from the internal flow passages 36 flows. First, the cleaning control unit 150 controls the actuation of the first to third three-way valves 71 to 73, the compressor 66, the cleaning switching valve 67, and the cap movement mechanism 94 in the same manner as in the embodiment described above. After this, the cleaning control unit 150 switches the fifth switching valve 85 so as to open the valve parts 85a and 85c while closing the other valve parts 85b, 85d, 85e, and 85f. Furthermore, the cleaning control unit 150 switches the fourth switching valve 84 so as to open the valve parts 84b and 84e while closing the other valve parts 84a, 84c, 84d, and 84f.

It should be noted that the details of the subsequent cleaning are the same as in the case of "2-2. Reverse direction cleaning" described above, so description of the details thereof will be omitted.

Then, the air or cleaning liquid that has cleaned the internal flow passages 36 is discharged to the liquid evacuation tank 65 via the coating material supply passage 52 and the valve parts 84b and 84e. In this discharge, the cleaning control unit 150 actuates the vacuum ejector 95 to discharge the cleaning liquid or air after cleaning to the liquid evacuation tank 65 by negative pressure. It is thereby possible to increase the amount of cleaning liquid or air drawn into the internal flow passages 36.

In this manner, air at a predetermined pressure and cleaning liquid are alternately supplied to the internal flow passages 36 at a predetermined pressure via the return flow passage 53. In this way, reverse direction cleaning of the internal flow passages 36 is performed. At this time, because the nozzle forming surface 32 (nozzles 33) is sealed by the cap 93, the internal flow passages 36 can be placed in a pressurized state, and cleaning can be executed in that pressurized state.

Furthermore, as described above, by providing the vacuum ejector 95 and discharging the spent cleaning fluid by actuation of the vacuum ejector 95 in addition to actuation of the sending pump 64, the discharge performance with respect to cleaning fluid after cleaning can be improved compared to the case where only the sending pump 64 is actuated. Namely, during reverse direction cleaning, this makes it possible to suppress deterioration of the cleaning performance of the coating material circulation passage 51 and increase in cleaning time even when the return flow passage 53 or the coating material supply passage 52 becomes longer.

It should be noted that, if the reverse direction cleaning of the internal flow passages 36 using air and cleaning liquid as described above is taken as one cycle, it is preferable to repeat such a cleaning cycle two or more times.

Furthermore, when the cleaning target is a second section that includes the degassing module 59 in addition to the first section in which the main cleaning target is the internal flow passages 36 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83b and 83d while closing the other valve parts 83a and 83c.

It should be noted that the details of the cleaning thereafter are the same as in the case of the first section described above, and therefore description of the details will be omitted.

Furthermore, when the cleaning target is a third section further including the removal filter 58 in addition to the second section in which the main cleaning target is the internal flow passages 36 and the degassing module 59 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83a and 83b while closing the other valve parts 83c and 83d. Furthermore, the cleaning control unit 150 switches the second switching valve 82 so as to open the valve parts 82b and 82d while closing the other valve parts 82a and 82c.

It should be noted that the details of the cleaning thereafter are the same as in the case of the first section described above, and therefore description of the details will be omitted.

Furthermore, when the cleaning target is a fourth section in which the cleaning target further includes the coating material supply passage 52 between the first switching valve 81 and the second switching valve 82 in addition to the third section in which the main cleaning target is the internal flow passages 36, the degassing module 59 and the removal filter 58 as described above, and reverse direction cleaning is to be performed thereon, the cleaning control unit 150 switches the fifth switching valve 85 so as to open the valve parts 85a and 85c while closing the other valve parts 85b, 85d, 85e, and 85f, in the same manner as described above. Furthermore, the cleaning control unit 150 switches the fourth switching valve 84 so as to open the valve parts 84a and 84b while closing the other valve parts 84c, 84d, 84e, and 84f. Furthermore, the cleaning control unit 150 switches the third switching valve 83 so as to open the valve parts 83a and 83b while closing the other valve parts 83c and 83d. Furthermore, the cleaning control unit 150 switches the second switching valve 82 so as to open the valve parts 82a and 82b while closing the other valve parts 82c and 82d. Furthermore, the cleaning control unit 150 switches the first switching valve 81 so as to open the valve parts 81a and 81b while closing the other valve parts 81c and 81d. Furthermore, the cleaning control unit 150 switches the first three-way valve 71 such that the cleaning fluid flows toward the liquid evacuation tank 65 side while the cleaning fluid does not flow toward the coating material tank 57 side.

It should be noted that the details of the cleaning thereafter are the same as in the case of the first section described above, and therefore description of the details will be omitted.

### (3-2. Discharge of cleaning fluid after cleaning from locations other than the fifth switching valve 85)

In the forward direction cleaning described above, the cleaning fluid after cleaning is discharged from the valve part 85e of the fifth switching valve 85 toward the liquid evacuation tank 65. However, the cleaning fluid after cleaning may be discharged toward the liquid evacuation tank 65 after passing through at least the sixth switching valve 86.

In this case, the cleaning control unit 150 switches the fifth switching valve 85 so as to, for example, open the valve parts 85a and 85b and close the other valve parts 85c, 85d, and 85f. Furthermore, the cleaning control unit 150 switches the sixth switching valve 86 so as to open the valve parts 86a and 86b and close the other valve parts 86c and 86d. Furthermore, the cleaning control unit 150 switches the fourth three-way valve 74 such that the cleaning fluid flows toward the liquid evacuation tank 65 side while the cleaning fluid does not flow toward the coating material tank 57 side.

In this case, cleaning can be performed by causing the cleaning fluid to flow also in the return flow passage 53 between the fifth switching valve 85 and the sixth switching valve 86. Furthermore, since the cleaning fluid passes through the suction pump 62, by actuating the suction pump 62 in addition to the sending pump 64 (or the vacuum ejector 95), the cleaning fluid after cleaning can be discharged even more favorably toward the liquid evacuation tank 65, and it becomes possible to further suppress deterioration in cleaning performance and increase in cleaning time of the coating material circulation passage 51.

Furthermore, as another example going through at least the sixth switching valve 86, the cleaning control unit 150 switches the fifth switching valve 85 so as to open the valve parts 85a and 85b and close the other valve parts 85c, 85d, 85e, and 85f, for example. Furthermore, the cleaning control unit 150 switches the sixth switching valve 86 so as to open the valve parts 86a and 86d and close the other valve parts 86b and 86c. Furthermore, the cleaning control unit 150 switches the first switching valve 81 so as to open the valve parts 81a and 81d and close the other valve parts 81b and 81c. Furthermore, the cleaning control unit 150 switches the first three-way valve 71 such that the cleaning fluid flows toward the liquid evacuation tank 65 side while the cleaning fluid does not flow toward the coating material tank 57 side.

In this case, cleaning can be performed by causing the cleaning fluid to flow also in the return flow passage 53 between the fifth switching valve 85 and the sixth switching valve 86. Furthermore, it becomes possible to perform cleaning by flowing the cleaning fluid also into the second bypass flow passage 56.

### (3-3. Supply of cleaning fluid from other than the fifth switching valve 85)

Furthermore, in the reverse direction cleaning described above, the cleaning fluid is supplied through the valve part 85c of the fifth switching valve 85. However, the cleaning fluid may also be supplied through the valve part 85c of the sixth switching valve 86.

In this case, the cleaning control unit 150 switches the sixth switching valve 86 so as to open the valve parts 86a and 86c and close the other valve parts 86b and 86d, for example. Furthermore, the cleaning control unit 150 switches the fifth switching valve 85 so as to open the valve parts 85a and 85b and close the other valve parts 85c, 85d, 85e, and 85f.

In this case, cleaning can be performed by causing the cleaning fluid to flow also in the return flow passage 53 between the fifth switching valve 85 and the sixth switching valve 86.

### (3-4. Supply of cleaning fluid via the first switching valve 81, the second bypass flow passage 56, and the sixth switching valve 86)

Furthermore, in the reverse direction cleaning, the cleaning control unit 150 may supply cleaning fluid such as cleaning liquid or air through the first switching valve 81, and further supply the cleaning fluid to the internal flow passages 36 from the return flow passage 53 side via the second bypass flow passage 56 and the sixth switching valve 86.

At this time, the first switching valve 81 is switched so as to open the valve parts 81c and 81d while closing the other valve parts 81a and 81b. Furthermore, the sixth switching valve 86 is switched so as to open the valve parts 86a and 86d of the sixth switching valve 86 while closing the other valve parts 86b and 86c. Furthermore, the fifth switching valve 85 is switched so as to open the valve parts 85a and 85b of the fifth switching valve 85 while closing the other valve parts 85c, 85d, 85e, and 85f. As a result, the cleaning fluid is supplied from the return flow passage 53 to the internal flow passages 36 via the first switching valve 81, the second bypass flow passage 56, the sixth switching valve 86, and the fifth switching valve 85.

It should be noted that the discharge of the cleaning fluid on the coating material supply passage 52 side is performed by switching the second to fourth switching valves 82 to 84 so as to discharge the cleaning fluid from at least one of the second to fourth switching valves 82 to 84. Specifically, when switching the second switching valve 82, actuation is controlled so as to open the valve parts 82b and 82d while closing the other valve parts 82a and 82c. Furthermore, when switching the third switching valve 83, actuation is controlled so as to open the valve parts 83b and 83d while closing the other valve parts 83a and 83c. Furthermore, when switching the fourth switching valve 84, actuation is controlled so as to open the valve parts 84b and 84e while closing the other valve parts 84a, 84c, 84d, and 84f.

In this manner, in the reverse direction cleaning, when the cleaning fluid such as cleaning liquid or air is supplied through the first switching valve 81, and the cleaning fluid is further supplied to the internal flow passages 36 from the return flow passage 53 side via the second bypass flow passage 56 and the sixth switching valve 86, it becomes possible to clean the return flow passage 53 together with the coating head 31.

### (3-5. Supply of cleaning fluid via first switching valve 81, coating material tank 57, and sixth switching valve 86)

Furthermore, in the reverse direction cleaning, the cleaning control unit 150 may supply the cleaning fluid such as cleaning liquid or air through the first switching valve 81, and further supply the cleaning fluid to the internal flow passages 36 from the return flow passage 53 side via the coating material tank 57 and the sixth switching valve 86.

At this time, the first switching valve 81 is switched so as to open the valve parts 81a and 81c while closing the other valve parts 81b and 81d. Furthermore, the first three-way valve 71 is switched so that the cleaning fluid flows toward the coating material tank 57 side while the cleaning fluid does not flow toward the liquid evacuation tank 65 side. Furthermore, the fourth three-way valve 74 is switched so that the cleaning fluid flows toward the sixth switching valve 86 side while the cleaning fluid does not flow toward the liquid evacuation tank 65 side.

Furthermore, the sixth switching valve 86 is switched so as to open the valve parts 86a and 86d of the sixth switching valve 86 while closing the other valve parts 86b and 86c. Furthermore, the fifth switching valve 85 is switched so as to open the valve parts 85a and 85b of the fifth switching valve 85 while closing the other valve parts 85c, 85d, 85e, and 85f. As a result, the cleaning fluid is supplied from the return flow passage 53 to the internal flow passages 36 via the first switching valve 81, the second bypass flow passage 56, the sixth switching valve 86, and the fifth switching valve 85.

It should be noted that the discharge of the cleaning fluid on the coating material supply passage 52 side is the same as in the case of the supply of the cleaning fluid via the first switching valve 81, the second bypass flow passage 56, and the sixth switching valve 86 described above, and therefore description of the discharge will be omitted.

With such reverse direction cleaning, it becomes possible to clean the return flow passage 53 together with the coating head 31. Furthermore, it also becomes possible to clean the coating material tank 57.

### (3-6. Variation of pressure applied by the cap 93)

In the embodiment or modified example described above, when executing at least one cleaning operation from among the forward direction cleaning and the reverse direction cleaning under the control of the cleaning control unit 150, the cap movement mechanism 94 may be actuated to vary the sealing pressure applied by the cap 93 to the nozzle forming surface 32 and the internal flow passages 36. Furthermore, the pressure on the nozzle forming surface 32 and in the internal flow passages 36 may be varied by releasing the sealed state of the nozzle forming surface 32 effected by the cap 93 and then resealing it.

By generating such pressure variation, it becomes possible to improve discharge performance with respect to foreign matter in the internal flow passages 36.

### (3-7. Other modified examples)

Furthermore, in the embodiment described above, the sending pump 64 corresponds to the pressurization means, but another member may also be used as the pressurization means instead of the sending pump 64. For example, when the cleaning liquid or air is supplied from the upstream side of the supply pump 61, the supply pump 61 may correspond to the pressurization means.

Furthermore, in the embodiment described above, the first vacuum ejector 91 and the second vacuum ejector 92 correspond to the cleaning suction means, but another member may be used as the suction means instead of these. For example, when the cleaning liquid or air is supplied from the upstream side of the return flow passage 53 relative to the suction pump 62, the suction pump 62 may correspond to the pressurization means. Furthermore, as the cleaning suction means, instead of at least one of the first vacuum ejector 91 and the second vacuum ejector 92, a pump similar to the suction pump may be connected to the valve part 84e or may be connected to the valve part 85e.

### (4. Supplementary notes)

The content set forth in the embodiments described above may be understood, for example, as follows.
[1] Namely,
   a cleaning system 1 for a coating robot 10 that performs coating on a coating portion of a vehicle, comprising:
   a coating head unit 30 comprising an inkjet type coating head 31 in which a plurality of nozzles 33 that eject coating material droplets are arrayed;
   a robot arm R1 which has the coating head unit 30 installed on its distal end and which moves the coating head unit 30 to a desired position;
   a cap 93 that seals at least a portion of a nozzle forming surface 32 on which the nozzles 33 are exposed;
   a cap movement mechanism 94 that moves the cap 93 relative to the nozzle forming surface 32 to achieve a sealed state of the nozzle forming surface 32;
   a return flow passage 53 which is connected to the coating material discharge side of the coating head 31 and which recovers the coating material or cleaning fluid toward a coating material tank 57 that is a separate element from at least the robot arm R1;
   a suction means (suction pump 62) which is provided in the middle of the return flow passage 53 and sucks at least coating material that was not ejected from the nozzles 33 during coating in which coating material is ejected;
   a pressurization means (sending pump 64) which pressurizes the cleaning fluid that is to be supplied toward the coating head 31 in one of the coating material supply passage 52 and the return flow passage 53;
   a cleaning suction means (first vacuum ejector 91, second vacuum ejector 92, vacuum ejector 95) which sucks cleaning fluid discharged from the coating head 31 in the other one of the coating material supply passage 52 and the return flow passage 53; and
   a control means (main control unit 110, cleaning control unit 150) which controls the actuation of the pressurization means (sending pump 64) and the cleaning suction means (first vacuum ejector 91, second vacuum ejector 92, vacuum ejector 95);
   wherein the control means (main control unit 110, cleaning control unit 150), during cleaning using the cleaning fluid, actuates the cap movement mechanism 94 to seal the nozzle forming surface 32 with the cap 93, and then actuates the cleaning suction means (first vacuum ejector 91, second vacuum ejector 92, vacuum ejector 95) along with actuation of the pressurization means (sending pump 64) so as to increase discharge speed of the cleaning fluid as compared to the case of actuating only the pressurization means (sending pump 64).

In this way, in the inkjet type coating head 31 using the coating robot 10, by actuating the cleaning suction means (first vacuum ejector 91, second vacuum ejector 92, vacuum ejector 95) in addition to the pressurization means (sending pump 64), it is possible to improve the discharge performance of the cleaning fluid as compared to the case of actuating only the pressurization means (sending pump 64). Therefore, even when the return flow passage 53 and the coating material supply passage 52 become longer, it becomes possible to suppress deterioration in cleaning performance and increase in cleaning time for the coating material circulation passage 51.

In particular, for example, when the cleaning fluid is supplied via the valve parts 84b and 84c of the fourth switching valve 84 and the spent cleaning fluid is discharged via the valve parts 85a and 85e of the fifth switching valve 85, a state is obtained in which the suction pump 62 is not passed through in the return flow passage 53. Therefore, the suction force of the suction pump 62 cannot be utilized. Therefore, the discharge of the cleaning fluid to the liquid evacuation tank 65 becomes dependent on the sending pressure of the cleaning fluid from the sending pump 64, leading to decrease in cleaning performance and increase in cleaning time for the coating material circulation passage 51, particularly in the case of specifications involving a long length of the return flow passage 53.

However, as described above, by actuating the cleaning suction means (first vacuum ejector 91, second vacuum ejector 92, vacuum ejector 95), it becomes possible to suppress deterioration in cleaning performance and increase in cleaning time for the coating material circulation passage 51 even in the case of specifications involving a particularly long length of the return flow passage 53.

Furthermore, by sealing the nozzle forming surface 32 with the cap 93, it is possible to suppress leakage of the cleaning fluid from the nozzles 33 to the outside, and thus cleaning can be performed in a state in which a predetermined pressure is applied inside the internal flow passages 36. Thereby, it becomes possible to increase the supply pressure of the cleaning fluid in the internal flow passages 36, to satisfactorily clean the internal flow passages 36 and the nozzles 33 with the cleaning fluid, and to eliminate clogging of the internal flow passages 36 and the nozzles 33.

[2] Furthermore, in the above embodiment, in addition to the content set forth under [1] above, preferably,
the coating head 31 comprises a plurality of internal flow passages 36 which supply the coating material or cleaning fluid to the nozzles 33; and
the control means: (main control unit 110, cleaning control unit 150) actuates the cap movement mechanism 94 to adjust the state of tight contact of the cap 93 with respect to the nozzle forming surface 32; and
controls actuation of the cleaning suction means (first vacuum ejector 91, second vacuum ejector 92, vacuum ejector 95) to change the negative pressure exerted by actuation of the cleaning suction means (first vacuum ejector 91, second vacuum ejector 92, vacuum ejector 95) and thereby varies the ratio between the amount of the cleaning fluid flowing through the internal flow passages 36 that is ejected from the nozzles 33 and the amount that passes through the internal flow passages 36 without being ejected from the nozzles 33.

In this way, by actuating the cap movement mechanism 94 to adjust the state of tight contact of the cap 93 with respect to the nozzle forming surface 32, it is possible to create a leaking state in which the cleaning fluid leaks out from the nozzles 33 to a predetermined extent. In such a cleaning fluid leaking state, if the negative pressure due to the actuation of the cleaning suction means (first vacuum ejector 91, second vacuum ejector 92, vacuum ejector 95) changes, the amount of cleaning fluid leaking out from the nozzles 33 can be adjusted to an appropriate ratio. Therefore, in cases where it is preferable to directly discharge foreign matter from the nozzles 33 using the cleaning fluid, this can be accommodated by adjusting the amount of cleaning fluid ejected from the nozzles 33.

[3] Furthermore, in the above embodiment, in addition to the content set forth under [1] and [2] above, or a combination thereof, preferably,
a first cleaning suction means (first vacuum ejector 91) corresponding to the cleaning suction means is connected to the coating material supply passage 52;
a second cleaning suction means (second vacuum ejector 92) corresponding to the cleaning suction means is connected to the return flow passage 53; and
the control means (main control unit 110, cleaning control unit 150):
   when performing forward direction cleaning in which the cleaning fluid is flowed from the coating material supply passage 52 to the return flow passage 53, actuates the second cleaning suction means (second vacuum ejector 92) so as to suck the cleaning fluid in the return flow passage 53; and
   when performing reverse direction cleaning in which the cleaning fluid is flowed from the return flow passage 53 to the coating material supply passage 52, actuates the first cleaning suction means (first vacuum ejector 91) so as to suck the cleaning fluid in the coating material supply passage 52.

In this way, satisfactory forward direction cleaning can be achieved by having the control means (main control unit 110, cleaning control unit 150) actuate the first cleaning suction means (first vacuum ejector 91). Furthermore, satisfactory reverse direction cleaning can be achieved by having the control means (main control unit 110, cleaning control unit 150) actuate the second cleaning suction means (second vacuum ejector 92). In this way, by executing forward direction cleaning and reverse direction cleaning, it becomes possible to improve the discharge performance with respect to foreign matter present in the coating material supply passage 52, the return flow passage 53, the components in those flow passages (removal filter 58 and degassing module 59), the internal flow passages 36 of the coating head 31, the nozzles 33, and the like. Therefore, it becomes possible to improve the cleaning performance at each of these portions.

[4] Furthermore, in the above embodiment, in addition to the content set forth under [3] above,
the control means (main control unit 110, cleaning control unit 150), when executing at least one cleaning operation from among the forward direction cleaning and the reverse direction cleaning, may actuate the cap movement mechanism 94 to vary the sealing pressure applied by the cap 93 to the nozzle forming surface 32, or release the sealed state of the nozzle forming surface 32 effected by the cap 93 and then reseal it.

In this way, by actuating the cap movement mechanism 94 to vary the sealing pressure applied by the cap 93 to the nozzle forming surface 32, for example, the cleaning fluid can be caused to leak out from the nozzles 33, and it becomes possible to improve the discharge performance with respect to foreign matter present in the internal flow passages 36 and the nozzles 33, and to improve the cleaning performance. Furthermore, by releasing the sealed state of the nozzle forming surface 32 effected by the cap 93, the direction of flow of the cleaning fluid, such as cleaning liquid and air, in the internal flow passages 36 and the nozzles 33 inside the coating head 31 is significantly changed, so it becomes possible to improve the discharge performance with respect to foreign matter present in the internal flow passages 36 and the nozzles 33, and to improve the cleaning performance.

[5] Furthermore, in the above embodiment, in addition to the content set forth under [3] above,
the first cleaning suction means and the second cleaning suction means preferably use the same vacuum ejector 95.

Employing such a configuration eliminates the need to provide two vacuum ejectors, making it possible to simplify the configuration and reduce the costs of fabricating the cleaning system 1.

### [Description of Reference Numerals]

1... cleaning system, 2... nozzle forming surface, 10... coating robot, 15... movement device, 16... moving platform, 17... rail, 18... drive mechanism, 18a... drive side sprocket, 18b... driven side sprocket, 18c... drive belt, 21... base, 22... first turning arm, 23... second turning arm, 24... fixed portion, 25... rotating portion, 26... movable shaft portion, 27... movable shaft portion, 28... wrist portion, 30... coating head unit, 31... coating head, 32... nozzle forming surface, 33... nozzle, 34... nozzle row, 34A... first nozzle row, 34B... second nozzle row, 35... piezoelectric substrate, 36... internal flow passage, 37... nozzle pressurization chamber, 50... coating material supply and cleaning mechanism, 51... coating material circulation passage, 52... coating material supply passage, 53... return flow passage, 54... bypass flow passage, 55... external supply passage, 56... second bypass flow passage, 57... coating material tank, 58... removal filter, 59... degassing module, 61... supply pump, 62... suction pump, 63... cleaning tank, 64... sending pump (corresponding to pressurization means), 65... liquid evacuation tank, 66... compressor, 67... cleaning switching valve, 67a to 67c... valve parts, 71... first three-way valve, 72... second three-way valve, 73... third three-way valve, 74... fourth three-way valve, 81... first switching valve (corresponding to a portion of cleaning suction means), 81a to 81d... valve parts, 82... second switching valve (corresponding to a portion of the cleaning suction means), 82a to 82d... valve parts, 83... third switching valve (corresponding to a portion of the cleaning suction means), 83a to 83d... valve parts, 84... fourth switching valve (corresponding to a portion of the cleaning suction means), 84a to 84f... valve parts, 85... fifth switching valve (corresponding to a portion of cleaning suction means), 85a to 85f... valve parts, 86... sixth switching valve (corresponding to a portion of the cleaning suction means), 86a to 86d... valve parts, 91... first vacuum ejector (corresponding to cleaning suction means), 92... second vacuum ejector (corresponding to cleaning suction means), 93... cap, 94... cap movement mechanism, 95... vacuum ejector (corresponding to cleaning suction means), 100... control unit (corresponding to control means), 110... main control unit (corresponding to control means), 120... robot arm control unit, 130... head control unit, 140... coating material supply control unit, 150... cleaning control unit (corresponding to control means), R1... robot arm

## Claims

1. A cleaning system for a coating robot that performs coating on a coating portion of a vehicle,
the cleaning system for a coating robot being **characterized in that** it comprises:
a coating head unit comprising an inkjet type coating head in which a plurality of nozzles that eject coating material are arrayed;
a robot arm which has said coating head unit installed on its distal end and which moves said coating head unit to a desired position;
a cap that seals at least a portion of a nozzle forming surface on which said nozzles are exposed;
a cap movement mechanism that moves said nozzle forming surface relative to said cap to achieve a sealed state of said nozzle forming surface;
a coating material supply passage which supplies said coating material or cleaning fluid toward said coating head;
a return flow passage which is connected to the coating material discharge side of said coating head and which recovers said coating material or said cleaning fluid toward a coating material tank that is a separate element from at least said robot arm;
a pressurization means which pressurizes said cleaning fluid that is to be supplied toward said coating head in one of said coating material supply passage and said return flow passage;
a cleaning suction means which sucks said cleaning fluid discharged from said coating head in the other one of said coating material supply passage and said return flow passage;
and a control means which controls actuation of said pressurization means and said cleaning suction means;
wherein:
said control means, during cleaning using said cleaning fluid, actuates said cap movement mechanism to seal said nozzle forming surface with said cap, and then actuates said cleaning suction means along with actuation of said pressurization means so as to increase discharge speed of said cleaning fluid as compared to the case of actuating only said pressurization means.

2. The cleaning system for a coating robot according to claim 1,
the cleaning system for a coating robot being **characterized in that**:
said coating head comprises a plurality of internal flow passages which supply said coating material or said cleaning fluid to said nozzles; and
said control means:
actuates said cap movement mechanism to adjust the state of tight contact of said cap with respect to said nozzle forming surface; and/or
controls actuation of said cleaning suction means to change the negative pressure exerted by actuation of the cleaning suction means and thereby varies the ratio between the amount of the said cleaning fluid flowing through said internal flow passages that is ejected from said nozzles and the amount that passes through said internal flow passages without being ejected from said nozzles.

3. The cleaning system for a coating robot according to claim 1 or 2, the cleaning system for a coating robot being **characterized in that**:
a first cleaning suction means corresponding to said cleaning suction means is connected to said coating material supply passage; and/or
a second cleaning suction means corresponding to said cleaning suction means is connected to said return flow passage; wherein preferably
said control means:
when performing forward direction cleaning in which said cleaning fluid is flowed from said coating material supply passage to said return flow passage, actuates said second cleaning suction means so as to suck said cleaning fluid in said return flow passage; and/or
when performing reverse direction cleaning in which said cleaning fluid is flowed from said return flow passage to said coating material supply passage, actuates said first cleaning suction means so as to suck said cleaning fluid in said coating material supply passage.

4. The cleaning system for a coating robot according to claim 3,
the cleaning system for a coating robot being **characterized in that**:
said control means:
when executing at least one cleaning operation from among said forward direction cleaning and said reverse direction cleaning, actuates said cap movement mechanism to vary the sealing pressure applied by said cap to said nozzle forming surface, or releases the sealed state of said nozzle forming surface effected by said cap and then reseals it.

5. The cleaning system for a coating robot according to claim 3 or 4,
the cleaning system for a coating robot being **characterized in that**:
said first cleaning suction means and said second cleaning suction means use the same vacuum ejector.
